Europäisches Patentamt

European Patent Office

Office européen des brevets

(19)

(11) Veröffentlichungsnummer: **0 304 626 B1**

# EUROPÄISCHE PATENTSCHRIFT

(12)

(45) Veröffentlichungstag der Patentschrift: **02.10.91**

(51) Int. Cl.⁵: **G08G 1/054**

(21) Anmeldenummer: **88111760.0**

(22) Anmeldetag: **21.07.88**

(54) **Verkehrsüberwachungseinrichtung.**

(30) Priorität: **26.08.87 DE 3728401**

(43) Veröffentlichungstag der Anmeldung:
**01.03.89 Patentblatt 89/09**

(45) Bekanntmachung des Hinweises auf die
Patenterteilung:
**02.10.91 Patentblatt 91/40**

(84) Benannte Vertragsstaaten:
**CH DE FR GB LI NL**

(56) Entgegenhaltungen:
**US-A- 3 206 748**
**US-A- 4 293 859**
**US-A- 4 335 382**

(73) Patentinhaber: **Robot Foto & Electronic GmbH
& Co KG
Hildener Strasse 57
W-4000 Düsseldorf 13(Benrath)(DE)**

(72) Erfinder: **Loeven, Hans-Gerd
Goslarer Strasse 64
W-4100 Duisburg 25(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg(DE)**

Rank Xerox (UK) Business Services

## Beschreibung

Die Erfindung betrifft eine Verkehrsüberwachungseinrichtung, insbesondere zum Einsatz in einem sich bewegenden Überwachungsfahrzeug (10), enthaltend

(a) ein Messgerät, z.B. ein Radargerät, zur Messung der Relativgeschwindigkeit eines zu erfassenden Fahrzeuges bezogen auf die Geschwindigkeit des Überwachungsfahrzeuges,

(b) eine Geschwindigkeitsmessanordnung zur Messung der Geschwindigkeit des Überwachungsfahrzeuges,

(c) eine photographische Aufnahmeeinrichtung zur Aufnahme des zu erfassenden Fahrzeuges,

(d) eine Auswerteschaltung zur Bestimmung der Geschwindigkeit des zu erfassenden Fahrzeugs aus der gemessenen Relativgeschwindigkeit des zu erfassenden Fahrzeugs und der gemessenen Geschwindigkeit des Überwachungsfahrzeugs, und

(e) eine Auslösevorrichtung zum Auslösen der Aufnahmeeinrichtung bei Überschreiten einer vorwählbaren Grenzgeschwindigkeit durch das zu erfassende Fahrzeug.

Eine solche Verkehrsüberwachungseinrichtung dient zur Erstellung einer beispielsweise photographischen Dokumentation als Beweis für eine Übertretung von Verkehrsregeln.

## Zugrundeliegender Stand der Technik

Es ist bekannt, die Fahrtgeschwindigkeit eines Fahrzeuges durch eine stationäre Radaranlage zu messen und zugleich mit dem Fahrzeug ein radargesteuertes Anzeigegerät zu photographieren.

Da es in der Regel erforderlich ist, Überwachungsaufnahmen selbsttätig oder durch Fernsteuerung auszulösen, ist es bekannt, für die Verschlüsse eine elektromagnetische Auslösevorrichtung vorzusehen.

Zur Verkehrsüberwachung werden auch Überwachungsfahrzeuge eingesetzt. Durch die DE-C-1 139 315 ist es bekannt, den Verkehr in der Weise zu überwachen, dass das Überwachungsfahrzeug einem zu erfassenden Fahrzeug mit gleicher Geschwindigkeit folgt und durch Photographie des Fahrzeuges und des als Fahrzeuggeschwindigkeitsanzeiger dienenden Tachometers des Überwachungsfahrzeuges nebst Uhrzeit und Datum einen dokumentarischen Beweis für eine Geschwindigkeitsüberschreitung herstellt.

In dem Prospekt TRAFFIPAX-micro speed der Firma Traffipax-Vertrieb, Hildener Strasse 57, 4000 Düsseldorf 13, ist ein Verkehrsradargerät beschrieben, das wahlweise für mobilen und stationären Betrieb ausgebildet ist. Das Gerät ist schwenkbar, so dass die Verkehrsüberwachung im stationären Betrieb wahlweise von der linken oder von der rechten Strassenseite vorgenommen werden kann. Es kann wahlweise der abfliessende und der ankommende Verkehr gemessen und photographisch dokumentiert werden. Im stationären Betrieb sind bei der Überwachung des abfliessenden Verkehrs für Pkw und Lkw jeweils getrennt einstellbare Grenzgeschwindigkeiten vorgesehen. Das Verkehrsradargerät ist wahlweise zum Einbau in Streifenwagen mit fest montierter Halterung für Radar-Antenne oder zur Aufstellung der Radar-Antenne auf Stativ ausgebildet. Bei geeigneten Kraftahrzeugen kann die Antenne unsichtbar hinter dem Grill montiert werden und während der Fahrt dort verbleiben. Für mobilen Einsatz ist das Gerät mit einem elektronischen Tachometer mit Digitalanzeige ausgestattet. Die Einschaltung des Tachometers erfolgt selbsttätig, sobald die Radaranlage abgeschaltet wird. Durch entsprechende Zeichen auf dem erstellten Photo ist es zu erkennen, ob das Gerät mit Radar oder Tachometer betrieben wurde.

Es ist unvorteilhaft, wenn das Überwachungsfahrzeug in der erforderlichen Nähe hinter dem zu erfassenden Fahrzeug mit gleicher Geschwindigkeit fahren muss, weil es dann leicht als Polizeifahrzeug erkannt wird. In dem Prospekt GATSO-meter der Firma Gatsometer B.V., Tetterodeweg 10, 2050 AA Overveen, ist eine Anlage der eingangs genannten Art erwähnt, die ebenfalls wahlweise zum mobilen oder stationären Betrieb einsetzbar ist. Bei dieser Anlage ist es zusätzlich möglich, die Radarüberwachung und die Tachometerüberwachung in der Weise zu benutzen, dass das Überwachungsfahrzeug mit konstanter Geschwindigkeit aber langsamer als das zu erfassende Fahrzeug fährt. Die Geschwindigkeit des Überwachungsfahrzeuges und die mit der Radaranlage gemessene Relativgeschwindigkeit des zu erfassenden Fahrzeuges bezogen auf die Geschwindigkeit des Überwachungsfahrzeuges werden gemessen und mittels Microcomputer ausgewertet, wobei sich die Geschwindigkeit des zu erfassenden Fahrzeugs als Summe der Geschwindigkeit des Überwachungsfahrzeugs und der Relativgeschwindigkeit des überholenden bzw. zu erfassenden Fahrzeugs ergibt. Als Aufnahmeeinrichtung für die Dokumentation einer möglichen Übertretung von Verkehrsregeln dient eine photographische Kamera, deren Auslösevorrichtung wahlweise durch die Radaranlage oder von Hand betätigt wird. Um ein möglichst unanfechtbares Beweismaterial zu erhalten werden weitere Informationsdaten, wie z.B. Datum und Uhrzeit in der Aufnahme eingeblendet.

Aus der US-A-4 335 382 ist ein Doppler-Radarsystem zur Verkehrsüberwachung bekannt, das auf entgegenkommende Fahrzeuge anspricht und daher die Summe der Geschwindigkeiten des zu erfassenden Fahrzeugs und des Überwachungsfahrzeugs misst. Von der gemessenen Geschwindigkeitssumme wird in einer kombinierten Zähler-Subtraktionsschaltung die gemessene Geschwindigkeit des Überwachungsfahrzeuges subtrahiert, um die Geschwindigkeit des zu erfassenden Fahrzeugs zu bestimmen, und es sind Anzeigegeräte für die Geschwindigkeit des zu erfassenden Fahrzeuges und die Geschwindigkeit des Überwachungsfahrzeugs vorgesehen. Die Geschwindigkeit des Überwachungsfahrzeugs wird mit einem Messgerät gemessen, das ein der Drehgeschwindigkeit eines Rades des Überwachungsfahrzeuges proportionales Signal liefert, dessen Frequenz mit der Dopplerfrequenz des Radarsystems verglichen und in Abwesenheit von entgegenkommendem Verkehr durch Radarmessung gegenüber der Strasse überwacht und gegebenenfalls korrigiert wird. Durch die besondere Konstruktion der Radaranlage und die Überwachung der Messung der Geschwindigkeit des Überwachungsfahrzeugs sollen Fehlmessungen ausgeschlossen werden.

Bei einer ähnlichen Anlage nach der US-A-4 293 859 ist eine bestimmte Winkelstellung der Anlage zur Achse des Überwachungsfahrzeugs vorgesehen, um Fehlmessungen durch seitliche Hintergrundsignale einzuschränken.

Die US-A-3 206 748 betrifft ein Aufzeichnungsgerät für Fahrzeuggeschwindigkeiten in Verbindung mit einem Überwachungsfahrzeug. Dabei dient eine photographische Kamera zur Aufnahme des zu erfassenden Fahrzeugs und der Registrierung der Geschwindigkeits- und Zeitangaben. Bei stationärem Überwachungsfahrzeug dient ein Radargerät und bei fahrendem Überwachungsfahrzeug dessen Tachometer zur Anzeige der Geschwindigkeit des zu erfassenden Fahrzeugs.

Die bekannte Verkehrsüberwachungseinrichtung der eingangs genannten Art, die in einem Überwachungsfahrzeug eingebaut ist und zur Geschwindigkeitsüberwachung dient, ist ineffektiv. Einerseits muss das Überwachungsfahrzeug mit konstanter Geschwindigkeit fahren und kann sich also nicht an den gegebenen Verkehr anpassen. Andererseits werden zu viele oder zuu wenige Aufnahmen gemacht, d.h. zu schnell fahrende Fahrzeuge werden ggf. nicht erfasst und es werden Fahrzeuge photographiert, die die zulässige Geschwindigkeit nicht überschreiten. Dies ist z.B. der Fall, wenn das Überwachungsfahrzeug zwar mit konstanter Geschwindigkeit aber zu schnell fährt. Das Überschreiten der zulässigen Geschwindigkeit wird z.T. nicht registriert, da das Radargerät keine überhöhte Geschwindigkeit misst. Wenn das Überwachungsfahrzeug zu langsam fährt, signalisiert die Einrichtung ein in der Tat nicht gegebenes Überschreiten der zulässigen Geschwindigkeit. Die Kamera wird ausgelöst und eine Aufnahme wird gemacht, in der später festgestellt wird, dass kein Überschreiten der zulässigen Geschwindigkeit vorlag.

**Offenbarung der Erfindung**

Der Erfindung liegt die Aufgabe zugrunde, eine Verkehrsüberwachungseinrichtung der eingangs genannten Art so auszubilden, dass das Überwachungsfahrzeug sich dem gegebenen Verkehr anpassen kann und alle eine maximal zulässige Geschwindigkeit überschreitenden Fahrzeuge auch erfasst werden, ohne dass überflüssige Aufnahmen gemacht werden.

Erfindungsgemäss wird diese Aufgabe dadurch gelöst, dass

(f) die Auswerteschaltung mit einem Relativgeschwindigkeitssignal des Messgerätes zur Messung der Relativgeschwindigkeit des zu erfassenden Fahrzeuges, mit einem Geschwindigkeitssignal der Geschwindigkeitsmessanordnung des Überwachungsfahrzeuges, einem einstellbaren Grenzgeschwindigkeitssignal entsprechend einer vorwählbaren Grenzgeschwindigkeit, einem unteren Grenzwert für das Geschwindigkeitssignal und einem unteren Grenzwert für das Relativgeschwindigkeitssignal beaufschlagt ist und mit der Auslösevorrichtung verbunden ist,

(g) die Auswerteschaltung enthält

(g1) eine Vergleichseinrichtung zum Vergleich des einstellbaren Grenzgeschwindigkeitssignals mit dem Relativgeschwindigkeitssignal des Messgerätes zur Messung der Relativgeschwindigkeit des zu erfassenden Fahrzeuges unter Berücksichtigung des Geschwindigkeitssignals der Geschwindigkeitsmessanordnung des Überwachungsfahrzeuges,

(g2) eine Vergleichseinrichtung zum Vergleich des Geschwindigkeitssignals mit seinem unteren Grenzwert, und

(g3) eine Vergleichseinrichtung zum Vergleich des Relativgeschwindigkeitssignals mit seinem unteren Grenzwert und

(h) Mittel zur Erzeugung eines die Auslösevorrichtung betätigenden Auslösesignals, wenn

(h1) die Vergleichseinrichtung anzeigt, dass die Geschwindigkeit des zu erfassenden Fahrzeugs die vorgewählte Grenzgeschwindigkeit übersteigt, und

(h2) die Vergleichseinrichtung anzeigt, dass das Geschwindigkeitssignal seinen unteren Grenzwert übersteigt, und

(h3) die Vergleichseinrichtung anzeigt, dass das Relativgeschwindigkeitssignal seinen unteren Grenzwert übersteigt.

Dadurch wird die Aufnahmeeinrichtung in Abhängigkeit von der Absolutgeschwindigkeit des zu erfassenden Fahrzeuges ausgelöst, und nicht etwa in Abhängigkeit von der Relativgeschwindigkeit des zu erfassenden Fahrzeuges bezogen auf das Überwachungsfahrzeug.

Ausgestaltungen der Erfindung sind Gegenstand der Unteransprüche.

Ausführungsbeispiele der Erfindung sind nachstehend unter Bezugnahme auf die zugehörige Zeichnungen näher erläutert.

## Kurze Beschreibung der Zeichnungen

Fig. 1 zeigt eine Verkehrssituation, wobei ein Überwachungsfahrzeug von einem zu erfassenden Fahrzeug überholt wird.

Fig. 2 ist ein Blockdiagramm einer Verkehrsüberwachungseinrichtung nach der Erfindung.

Fig. 3 zeigt schematisch die Anzeigevorrichtung von Fig. 1.

Fig. 4 zeigt eine mittels der Verkehrsüberwachungseinrichtung erzielte, photographische Dokumentation des zu erfassenden Fahrzeuges.

## Bevorzugte Ausführungen der Erfindung

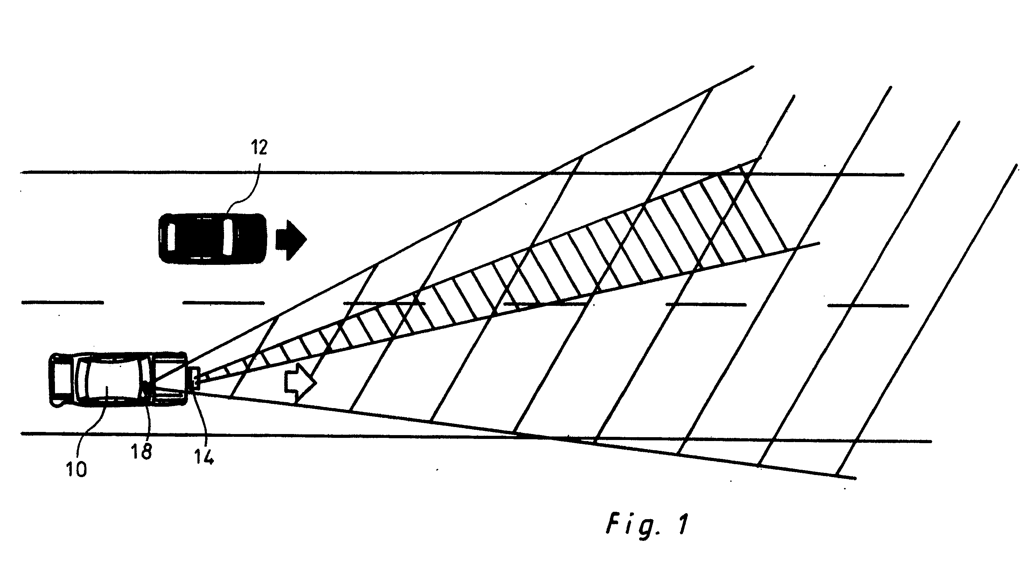

In Fig. 1 ist eine übliche Verkehrssituation z.B. auf einer Autobahn dargestellt. Ein Überwachungsfahrzeug 10 fährt auf der rechten Spur und wird von einem zu erfassenden Fahrzeug 12 überholt.

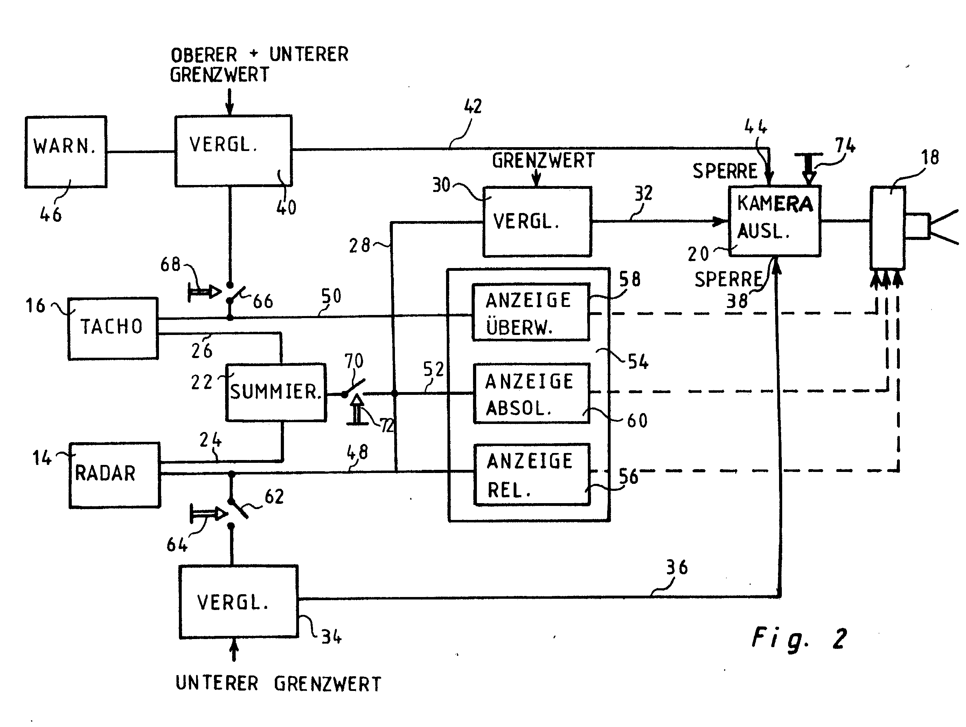

In Fig. 2 ist eine erfindungsgemässe Verkehrsüberwachungseinrichtung als Blockdiagramm dargestellt. Ein Radargerät 14 misst die Relativgeschwindigkeit des zu erfassenden Fahrzeuges 12 bezogen auf das Überwachungsfahrzeug 10 und liefert ein entsprechendes Signal. Zur Messung der Geschwindigkeit des Überwachungfahrzeuges 10 ist es mit einer Geschwindigkeitsmessanordnung 16, z.B. einem Tachometer versehen, die ebenfalls ein entsprechendes Signal liefert. Eine Aufnahmeeinrichtung 18 dient zur Aufnahme des zu erfassenden Fahrzeuges 12. Die Aufnahmeeinrichtung 18 wird durch eine bei einstellbaren Grenzgeschwindigkeiten automatisch auslösbare Auslösevorrichtung 20 ausgelöst. Eine Summiereinrichtung 22 wird über eine Leitung 24 mit dem Signal von der Geschwindigkeitsmessanordnung 16 beaufschlagt. Die Summiereinrichtung 22 liefert ein der Summe der beiden Geschwindigkeiten entsprechendes Signal. Diese Summe entspricht der Absolutgeschwindigkeit des zu erfassenden Fahrzeuges 12. Über eine Leitung 28 wird dieses Signal auf eine Vergleichseinrichtung 30 aufgeschaltet. In der Vergleichseinrichtung 30 wird die Absolutgeschwindigkeit des zu erfassenden Fahrzeuges 12 mit einem eingebbaren Grenzwert verglichen. Wenn die Absolutgeschwindigkeit des zu erfassenden Fahrzeuges 12 den eingegebenen Grenzwert überschreitet, liefert die Vergleichseinrichtung 30 über eine Leitung 32 ein Signal an die Auslösevorrichtung 20.

Das Signal von dem Radargerät 14 wird ebenfalls auf eine Vergleichseinrichtung 34 aufgeschaltet, die ein Signal über eine Leitung 36 an eine Sperre 38 für die Auslösevorrichtung 20 liefert, wenn die mit dem Radargerät 14 gemessene Relativgeschwindigkeit des zu überwachenden Fahrzeuges 12 einen in der Vergleichseinrichtung 34 eingebbaren Grenzwert unterschreitet.

Das Signal von der Geschwindigkeitsmessanordnung 16 wird ebenfalls auf eine Vergleichseinrichtung 40 aufgeschaltet, die ein Signal über eine Leitung 42 an eine Sperre 44 für die Auslösevorrichtung 20 liefert, wenn die mit der Geschwindigkeitsmessanordnung 16 gemessene Geschwindigkeit des Überwachungsfahrzeuges 10 einen in der Vergleichseinrichtung 40 eingegebenen unteren Grenzwert unterschreitet.

Zur Geschwindigkeitskontrolle des Überwachungsfahrzeuges 10 ist an der Vergleichseinrichtung 40 eine Warnvorrichtung 46 gekoppelt, welche ein akustisches und/oder optisches Signal an den Fahrer liefert, wenn das Überwachungsfahrzeug 10 den in der Vergleichseinrichtung 40 eingegebenen unteren oder oberen Grenzwert unter- bzw. überschreitet. Weiterhin oder alternativ dazu kann ein (in Fig. 1 nicht dargestellter) ein- und ausschaltbarer Geschwindigkeitsregler vorgesehen sein, mittels dessen die Geschwindigkeit des Überwachungsfahrzeuges 10 automatisch zwischen den in der Vergleichseinrichtung 40 eingegebenen Grenzwerten gehalten wird.

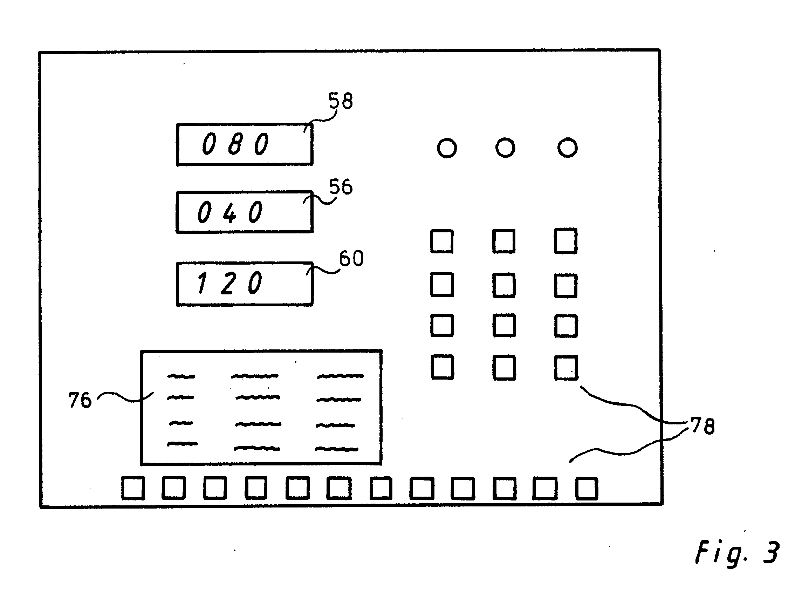

Die Geschwindigkeitssignale von dem Radargerät 14, von der Geschwindigkeitsmeßanordnung 16 und von der Summiereinrichtung 22 werden über Leitungen 48, 50 bzw. 52 einer digitalen Anzeigevorrichtung 54 zugeführt, die unten anhand von Fig. 3 näher beschrieben wird. Die Anzeigevorrichtung 54 beinhaltet zumindest eine Anzeige 56 der Relativgeschwindigkeit des zu überwachenden Fahrzeuges 12, eine Anzeige 58 der Geschwindigkeit des Überwachungsfahrzeuges 10 und eine Anzeige 60 der Absolutgeschwindigkeit des zu erfassenden Fahrzeuges 12.

Die Automatik der Auslösevorrichtung 20, d.h. die durch die Vergleichseinrichtungen 30, 34 und 40 gesteuerte Signalbeaufschlagung der Auslösevorrichtung 20, ist ausschaltbar. Zu diesem Zweck dienen beispielsweise Schalter 62, 66 und 70 sowie Druckknöpfe 64, 68, 72 und 74. Hierdurch kann die Aufnahmevorrichtung manuell ausgelöst werden, wenn beispielsweise das Überwachungsfahrzeug hinter dem zu erfassenden Fahrzeug mit gleicher Geschwindigkeit fährt. Es ist dadurch ebenfalls möglich, daß Überwachungsfahrzeug 10 am Straßenrand zu parken und die Verkehrsüberwachungsanlage als stationäre Radaranlage zu verwenden. Hierfür muß die Verkehrsüberwachungseinrichtung in mehreren definierten Stellungen bezüglich dem Überwachungsfahrzeug 10 einstellbar sein. Zu diesem Zweck ist die Verkehrsüberwachungseinrichtung schwenkbar angeordnet und in mehreren Stellungen arretierbar. Im übrigen sind diese Arten der Verkehrsüberwachung bekannt und werden hier nicht näher geschildert.

Wie in Fig. 2 gestrichelt angedeutet, sind die Relativund Absolutgeschwindigkeiten des zu erfassenden Fahrzeuges 12 sowie die Geschwindigkeit des Überwachungsfahrzeuges 10 auf der mittels der Aufnahmevorrichtung 18 erzielten Aufnahme registriert.

In Fig. 3 ist eine Ausführungsform der Anzeigevorrichtung 54 schematisch dargestellt. Beispielsweise zeigt die obere Anzeige 58 die Geschwindigkeit des Überwachungsfahrzeuges 10, die mittlere Anzeige 56 die Relativgeschwindigkeit und die untere Anzeige 60 die Absolutgeschwindigkeit des zu erfassenden Fahrzeuges 12 an. Mit 76 ist ein Display bezeichnet, in welcher weitere, mittels Bedienungstasten 78 einstellbare Informationen, wie z.B. Zeitinformationen dargestellt werden. Solche Display-Vorrichtungen finden schon in üblichen Verkehrsüberwachungsanlagen Verwendung und werden deshalb hier nicht näher beschrieben.

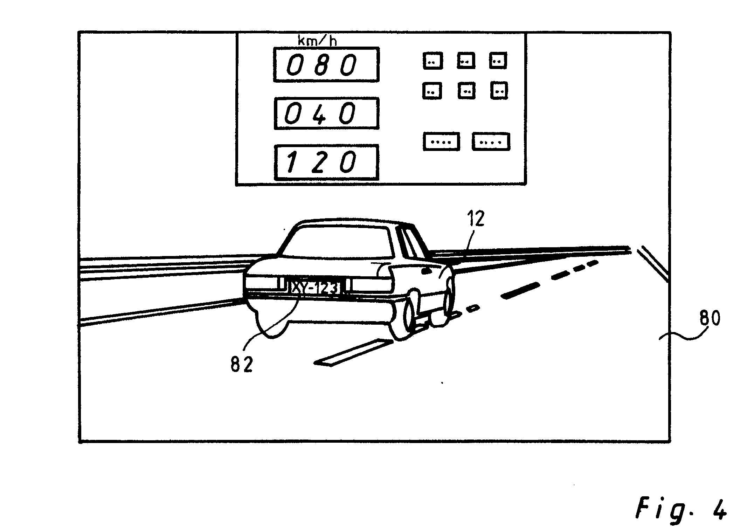

Die Aufnahmevorrichtung 18 ist vorzugsweise eine photographische Kamera zur Erstellung einer in Fig. 4 dargestellten photographischen Dokumentation 80 des zu erfassenden Fahrzeuges 12. Die Anzeigevorrichtung 54 ist in der photographischen Dokumentation 80 eingespiegelt und die momentane Betriebsweise der Verkehrsüberwachungseinrichtung wird angezeigt. Es ist aber auch möglich, die Informationen z.B. auf dem Filmrand festzuhalten.

Die beschriebene Anordnung arbeitet wie folgt:

In die Vergleichseinrichtung 34 für die mit dem Radargerät 14 gemessene Geschwindigkeit des zu erfassenden Fahrzeuges wird ein unterer Grenzwert eingegeben. Dieser Grenzwert richtet sich nach dem Genauigkeitsbereich des Radargerätes 14 und soll in dem hier aufgeführten Zahlenbeispiel 20 km/h betragen.

In die Vergleichseinrichtung 40 für die mit der Geschwindigkeitsmeßanordnung 16 gemessene Geschwindigkeit des Überwachungsfahrzeuges 10 wird ein unterer und ein oberer Grenzwert eingegeben. Der untere Grenzwert richtet sich nach dem Genauigkeitsbereich der Geschwindigkeitsmeßanordnung 16 und wird hier mit 25 km/h angegeben. Der obere Grenzwert richtet sich nach der an der betreffenden Straßenabschnitt maximal erlaubten Geschwindigkeit und dem unteren Grenzwert für die mit dem Radargerät 14 gemessene Geschwindigkeit. Diesen oberen Grenzwert erhält man durch Subtrahieren des unteren Grenzwertes für die mit dem Radargerät 14 gemessene Geschwindigkeit von der maximal erlaubten Geschwindigkeit. In dem hier aufgeführten Zahlenbeispiel wird angenommen, daß die maximal erlaubte Geschwindigkeit 100 km/h beträgt. Hier beträgt demnach der obere Grenzwert der Vergleichseinrichtung 40 80 km/h (100 km/h - 20 km/h = 80 km/h).

In die Vergleichseinrichtung 30 für durch die Summiereinrichtung 22 erhaltene Absolutgeschwindigkeit des zu erfassenden Fahrzeuges 12 wird ebenfalls ein Grenzwert eingegeben, der mit der maximal erlaubten Geschwindigkeit übereinstimmt und hier also 100 km/h beträgt.

Wenn das Überwachungsfahrzeug 10 von einem Fahrzeug 12 überholt wird, wird die Geschwindigkeit dieses Fahrzeuges 12 mittels des Radargerätes 14 gemessen. Nur wenn die Geschwindigkeit des Fahrzeuges 12 die maximal erlaubte Geschwindigkeit von 100 km/h überschreitet, z.B. 120 km/h beträgt, wird die Auslösevorrichtung 20 mit einem Auslösesignal von der Vergleichseinrichtung 30 beaufschlagt, so daß die Aufnahmevorrichtung 18 ausgelöst wird. Es entsteht z.B. eine photographische Dokumentation 80 des zu erfassenden Fahrzeuges 12. Durch geeignete Optik und geeignete Anordnung des Radargerätes 14 und die Aufnahme-Vorrichtung 18 wird gewährleistet, dass das Fahrzeug 12 und das Fahrzeugkennzeichen 82 gut erkennbar sind, und dass das Fahrzeug 12 eine zentrale Position in der Dokumentation 80 einnimmt. In der Dokumentation 80 eingespiegelt erscheint auch die Anzeigevorrichtung 54 mit den entsprechenden Angaben (s. Fig. 4). Die angezeigte Relativgeschwindigkeit des zu erfassenden Fahrzeuges 12 und die angezeigte Geschwindigkeit des Überwachungsfahrzeuges 10 dienen dabei nicht nur zur Information, sondern auch zur Überprüfung der errechneten Absolutgeschwindigkeit des zu erfassenden Fahrzeuges 12.

Wenn das Überwachungsfahrzeug 10 langsamer als die in der Vergleichseinrichtung 40 eingegebene untere Grenzgeschwindigkeit 25 km/h fährt, dass die Geschwindigkeitsmessanordnung einen zu ungenauen Wert liefert, wird die Auslösevorrichtung 20 mit einem Sperrsignal von der Vergleichseinrichtung 40 beaufschlagt und gesperrt. Fährt das Überwachungsfahrzeug 10 schneller als die in die Vergleichseinrichtung 40 eingegebene obere Grenzgeschwindigkeit 80 km/h, z.B. 95 km/h, dann werden die Fahrzeuge 12, die mit einer Geschwindigkeit zwischen 100 km/h und 115 km/h fahren, in unerwünschter Weise nicht erfasst. Um ein solches Unter- bzw. Überschreiten der Grenzwerte zu vermeiden, ist die Vergleichsvorrichtung 40 mit einer Warnvorrichtung gekoppelt, die ein Signal an den Fahrer liefert, wenn die Grenzwerte unter- bzw. überschritten werden.

Es kann auch ein Geschwindigkeitsregler vorgesehen sein, mittels dessen die Geschwindigkeit des Überwachungsfahrzeuges 10 automatisch zwischen den in der Vergleichseinrichtung 40 eingegebenen Grenzwerten gehalten wird.

Mit dieser Verkehrsüberwachungseinrichtung wird also das Erfassen aller eine maximal zulässige Geschwindigkeit überschreitenden Fahrzeuge erreicht, ohne dass zu viele Aufnahmen gemacht werden, wobei das Überwachungsfahrzeug 10 keine vorgegebene, konstante Geschwindigkeit einzuhalten braucht, sondern sich dem Verkehr völlig anpassen kann.

**Patentansprüche**

1. Verkehrsüberwachungseinrichtung, insbesondere zum Einsatz in einem sich bewegenden Überwachungsfahrzeug (10), enthaltend

(a) ein Messgerät, z.B. ein Radargerät (14), zur Messung der Relativgeschwindigkeit eines zu erfassenden Fahrzeuges (12) bezogen auf die Geschwindigkeit des Überwachungsfahrzeuges (10),

(b) eine Geschwindigkeitsmessanordnung (16) zur Messung der Geschwindigkeit des Überwachungsfahrzeuges (10),

(c) eine photographische Aufnahmeeinrichtung (18) zur Aufnahme des zu erfassenden Fahrzeuges (12),

(d) eine Auswerteschaltung zur Bestimmung der Geschwindigkeit des zu erfassenden Fahrzeugs (12) aus der gemessenen Relativgeschwindigkeit des zu erfassenden Fahrzeugs (12) und der gemessenen Geschwindigkeit des Überwachungsfahrzeugs (10), und

(e) eine Auslösevorrichtung (20) zum Auslösen der Aufnahmeeinrichtung (18) bei Überschreiten einer vorwählbaren Grenzgeschwindigkeit des zu erfassenden Fahrzeuges, **dadurch gekennzeichnet, dass**

(f) die Auswerteschaltung mit einem Relativgeschwindigkeitssignal des Messgerätes zur Messung der Relativgeschwindigkeit des zu erfassenden Fahrzeuges (12) mit einem Geschwindigkeitssignal der Geschwindigkeitsmessanordnung (16) des Überwachungsfahrzeuges (10), einem einstellbaren Grenzgeschwindigkeitssignal entsprechend einer vorwählbaren Grenzgeschwindigkeit, einem unteren Grenzwert für das Geschwindigkeitssignal und einem unteren Grenzwert für das Relativgeschwindigkeitssignal beaufschlagt ist und mit der Auslösevorrichtung (20) verbunden ist,

(g) die Auswerteschaltung enthält

(g1) eine erste Verglichseinrichtung (30) zum Vergleich des einstellbaren Grenzgeschwindigkeitssignals mit dem Relativgeschwindigkeitssignal des Messgerätes zur Messung der Relativgeschwindigkeit des zu erfassenden Fahrzeuges unter Berücksichtigung des Geschwindigkeitssignals der Geschwindigkeitsmessanordnung des Überwachungsfahrzeuges (10),

(g2) eine zweite Vergleichseinrichtung (40) zum Vergleich des Geschwindigkeitssignals des Überwachungsfahrzeugs (10) mit seinem unteren Grenzwert, und

(g3) eine dritte Vergleichseinrichtung (34) zum Vergleich des Relativgeschwindigkeitssignals mit seinem unteren Grenzwert und

(h) Mittel (30, 44, 38) zur Erzeugung eines die Auslösevorrichtung betätigenden Auslösesignals, wenn

(h1) die erste Vergleichseinrichtung (30) anzeigt, dass die Geschwindigkeit des zu erfassenden Fahrzeugs (12) die vorgewählte Grenzgeschwindigkeit übersteigt, und

(h2) die zweite Vergleichseinrichtung (40) anzeigt, dass das Geschwindigkeitssignal des Überwachungsfahrzeugs (10) seinen unteren Grenzwert übersteigt, und

(h3) die dritte Vergleichseinrichtung (34) anzeigt, dass das Relativgeschwindigkeitssignal seinen unteren Grenzwert übersteigt.

2. Verkehrsüberwachungseinrichtung nach Anspruch 1, **dadurch gekennzeichnet, dass** eine ein- und ausschaltbare Warnvorrichtung (46) vorgesehen ist, welche ein akustisches und/oder optisches Signal liefert, wenn das Geschwindigkeitssignal der Geschwindigkeitsmessanordnung (16) des Überwachungsfahrzeuges (10) seinen unteren Grenzwert unterschreitet.

3. Verkehrsüberwachungseinrichtung nach Anspruch 1 oder 2, **dadurch gekennzeichnet, dass** eine ein- und ausschaltbare Warnvorrichtung (46) vorgesehen ist, welche ein akustisches und/oder optisches Signal liefert, wenn das Geschwindigkeitssignal der Geschwindigkeitsmessanordnung (16) des Überrwachungsfahrzeuges (10) einen vorgebbaren oberen Grenzwert überschreitet.

4. Verkehrsüberwachungseinrichtung nach einem der Ansprüche 2 und 3, **dadurch gekennzeichnet, dass** ein ein- und ausschaltbarer Geschwindigkeitsregler vorgesehen ist, mittels dessen die Geschwindigkeit des Überwachungsfahrzeuges (10) automatisch zwischen den vorgebbaren Grenzwerten gehalten wird.

5. Verkehrsüberwachungseinrichtung nach einem der vorhergehenden Ansprüche, **dadurch gekennzeichnet, dass** eine digitale Anzeigevorrichtung (54) zur Anzeige der Relativ- und Absolutgeschwindigkeit des zu erfassenden Fahrzeuges (12) sowie der Geschwindigkeit des Überwachungsfahrzeuges (10) vorgesehen ist.

6. Verkehrsüberwachungseinrichtung nach einem der vorhergehenden Ansprüche, **dadurch gekennzeichnet, dass** die Mittel (30, 44, 38) zur Erzeugung des Auslösesignals für die Auslösevorrichtung (20) ausschaltbar sind, so dass entweder die Auslösevorrichtung (20) manuell betätigbar ist oder die Verkehrsüberwachungseinrichtung als stationäres Verkehrsüberwachungsgerät in Form einer Radaranlage verwendbar ist.

7. Verkehrsüberwachungseinrichtung nach Anspruch 5, **dadurch gekennzeichnet, dass** die Relativ- und Absolutgeschwindigkeiten des zu erfassenden Fahrzeuges (12) sowie die Geschwindigkeit des Überwachungsfahrzeuges (10) auf der mittels der Aufnahmevorrichtung (18) erzielten Aufnahme registrierbar sind.

8. Verkehrsüberwachungseinrichtung nach einem der vorgehenden Ansprüche, **dadurch gekennzeichnet, dass** die Aufnahmevorrichtung (18) eine photographische Kamera zur Erstellung einer photographischen Dokumentation (80) des zu erfassenden Fahrzeuges (12) ist.

9. Verkehrsüberwachungseinrichtung nach Anspruch 8, **dadurch gekennzeichnet, dass** die Anzeigevorrichtung (54) in die photographische Dokumentation (80) eingespiegelt ist.

10. Verkehrsüberwachungseinrichtung nach Anspruch 6, **dadurch gekennzeichnet, dass** die momentane Betriebsweise der Verkehrsüberwachungseinrichtung anzeigbar und registrierbar ist.

11. Verkehrsüberwachungseinrichtung nach einem der Ansprüche 6 bis 10, **dadurch gekennzeichnet, dass** sie schwenkbar angeordnet ist.

12. Verkehrsüberwachungseinrichtung nach Anspruch 11, **dadurch gekennzeichnet, dass** sie in einer oder mehreren vorgegebenen Stellungen arretierbar ist.

13. Verkehrsüberwachungseinrichtung nach einem der vorhergehenden Ansprüche, **dadurch gekennzeichnet, dass** sie abnehmbar sind.

**Claims**

1. Traffic monitoring device, particularly for application in a moving monitoring vehicle (10), comprising

   (a) a measuring instrument, e.g. a radar instrument (14), for measuring the relative speed of a vehicle (12) to be detected with respect to the speed of the monitoring vehicle (10),

   (b) a speed measuring arrangement (16) for measuring the speed of the monitoring vehicle (10),

   (c) a photographic recording device (18) for recording the vehicle (12) to be detected,

   (d) an evaluation circuit for determination of the speed of the vehicle (12) to be detected from the measured relative speed of the vehicle (12) to be detected and the measured speed of the monitoring vehicle (10), and

   (e) a trigger device (20) for triggering the recording device (18) when the vehicle to be detected is exceeding a predetermined limit speed,

**characterized in that**

   (f) a relative speed signal from the measuring instrument for measuring the relative speed of the vehicle (12) to be detected, a speed signal from the speed measuring arrangement (16) of the monitoring vehicle (10), an adjustable limit speed signal corresponding to a predetermined limit speed, a lower limit value for the speed signal and a lower limit value for the relative speed signal are applied to the evaluation circuit and the evaluation circuit is connected to the trigger device (20),

   (g) the evaluation circuit comprises

   ($g_1$) a first comparator (30) for comparing the adjustable limit speed signal with the relative speed signal of the measuring instrument for measuring the relative speed of the vehicle to be detected by taking into account the speed signal of the speed measuring arrangement of the monitoring vehicle (10),

   ($g_2$) a second comparator (40) for comparing the speed signal of the monitoring vehicle (10) with its lower limit value, and

(g₃) a third comparator (34) for comparing the relative speed signal with its lower limit value, and

(h) means (30, 44, 38) for generating a trigger signal actuating the trigger device when

(h₁) the first comparator (30) indicates that the speed of the vehicle (12) to be detected exceeds the predetermined limit speed, and (h₂) the second comparator (40) indicates that the speed signal of the monitoring vehicle (10) exceeds its lower limit value, and

(h₃) the third comparator (34) indicates that the relative speed signal exceeds its lower limit value.

2. Traffic monitoring device as set forth in claim 1, **characterized in that** a warning device (46) adapted to be turned-on and -off is provided, which supplies an acoustic and/or optical signal when the speed signal from the speed measuring arrangement (16) of the monitoring vehicle (10) drops below its lower limit value.

3. Traffic monitoring device as set forth in claim 1 or 2, **characterized in that** a warning device (46) adapted to be turned-on and -off is provided, which supplies an acoustic and/or optical signal when the speed signal from the speed measuring arrangement (16) of the monitoring vehicle (10) exceeds a predeterminable upper limit value.

4. Traffic monitoring device as set forth in any one of the claims 2 and 3, **characterized in that** a speed controller adapted to be turned-on and -off is provided, by means of which the speed of the monitoring vehicle (10) automatically is kept between the predeterminable limit values.

5. Traffic monitoring device as set forth in any one of the preceding claims, **characterized in that** a digital indication device (54) is provided for indicating the relative and absolute speed of the vehicle (12) to be detected and the speed of the monitoring vehicle (10).

6. Traffic monitoring device as set forth in any one of the preceding claims, **characterized in that** the means 30, 44, 38) for generating the trigger signal for the trigger device (20) is adapted to be turned-off such that the trigger device (20) either is adapted to be manually actuated or the traffic monitoring device is adapted to be used in the form of a stationary radar device.

7. Traffic monitoring device as set forth in claim 5, **characterized in that** the relative and absolute speeds of the vehicle (12) to be detected and the speed of the monitoring vehicle (10) are adapted to be registered in the picture achieved by means of the recording device (18).

8. Traffic monitoring device as set forth in any one of the preceding claims, **characterized in that** the recording device (18) is a photographic camera for preparing a photographic documentation (80) of the vehicle (12) to be detected.

9. Traffic monitoring device as set forth in claim 8, **characterized in that** the indication device (54) is reflected in the photographic documentation (80).

10. Traffic monitoring device as set forth in claim 6, **characterized in that** the momentaneous operating mode of the traffic monitoring device is adapted to be indicated and registered.

11. Traffic monitoring device as set forth in any one of the claims 6 to 10, **characterized in that** it is arranged pivotably.

12. Traffic monitoring device as set forth in claim 11, **characterized in that** it is adapted to be stopped in one or several positions.

13. Traffic monitoring device as set forth in any one of the preceding claims, **characterized in that** it is adapted to be removed.

## Revendications

1. Dispositif de surveillance du trafic, destiné en particulier à être inséré dans un véhicule de surveillance (10) en mouvement, comprenant

(a) un appareil de mesure, par exemple un appareil radar (14), destiné à mesurer la vitesse relative d'un véhicule à détecter (12) par rapport à la vitesse du véhicule de surveillance (10),

(b) une disposition de mesure de la vitesse (16) destinée à mesurer la vitesse du véhicule de surveillance (10),

(c) un dispositif de prise photographique (18) destiné à reproduire le véhicule à détecter (12),

(d) un circuit d'évaluation destiné à déterminer la vitesse du véhicule à détecter (12) à partir de la vitesse relative mesurée du véhicule à détecter (12) et la vitesse mesurée du véhicule de surveillance (10), et

(e) un dispositif de déclenchement (20) destiné à déclencher le dispositif de prise de photo (18) en cas de dépassement par le véhicule à détecter d'une vitesse limite choisie à l'avance,

caractérisé par le fait que

(f) un signal de vitesse relative de l'appareil de mesure destiné à mesurer la vitesse relative du véhicule à détecter (12), un signal de vitesse de la disposition de mesure de vitesse (16) du véhicule de surveillance (10), un signal de vitesse limite ajustable correspondant à une vitesse limite choisie à l'avance, et une valeur limite inférieure pour le signal de vitesse relative sont appliqués au circuit d'évaluation relié au dispositif de déclenchement (20),

(g) le circuit d'évaluation comprend

(g₁) un premier dispositif comparateur (30) destiné à comparer le signal de vitesse limite ajustable au signal de vitesse relative de l'appareil de mesure destiné à mesurer la vitesse relative du véhicule à détecter en tenant compte du signal de vitesse de la disposition de mesure de vitesse du véhicule de surveillance (10),

(g₂) un second dispositif comparateur (40) destiné à comparer le signal de vitesse du véhicule de surveillance à sa valeur limite inférieure, et

(g₃) un troisième dispositif comparateur (34) destiné à comparer le signal de vitesse relative à sa valeur limite inférieure, et

(h) des moyens (30, 44, 38) destinés à engendrer un signal de déclenchement actionnant le dispositif de déclenchement, lorsque

(h₁) le premier dispositif comparateur (30) indique que la vitesse du véhicule (12) à détecter dépasse la vitesse limite préchoisie, et

(h₂) le second dispositif comparateur (40) indique que le signal de vitesse du véhicule de surveillance (10) dépasse sa valeur limite inférieure, et

(h₃) le troisième dispositif comparateur (34) indique que le signal de vitesse relative dépasse sa valeur limite inférieure.

2. Dispositif de surveillance selon la revendication 1, caractérisé par le fait qu'est prévu un dispositif avertisseur (46) qui peut être mis en et hors circuit et qui fournit un signal acoustique et/ou optique lorsque le signal de vitesse de la disposition de mesure de la vitesse (16) du véhicule de surveillance (10) reste au-dessous de sa valeur limite inférieure.

3. Dispositif de surveillance du trafic selon la revendication 1 ou 2, caractérisé par le fait qu'est prévu un dipositif avertisseur (46) qui peut être mis en et hors circuit et qui fournit un signal acoustique et/ou optique lorsque le signal de vitesse de la disposition de mesure de la vitesse (16) du véhicule de surveillance (10) dépasse une valeur limite supérieure prédéterminable.

4. Dispositif de surveillance du trafic selon l'une des revendications 2 et 3, caractérisé par le fait qu'un régulateur de la vitesse qui peut être mis en et hors circuit, est prévu, au moyen duquel la vitesse du véhicule de surveilllance (10) est tenue automatiquement entre les valeurs limites prédéterminables.

5. Dispositif de surveillance du trafic selon l'une des revendications ci-dessus, caractérisé par le fait qu'un dispositif indicateur digital (54) est prévu, destiné à l'indication de la vitesse relative et absolue du véhicule à détecter (12) ainsi que la vitesse du véhicule de surveillance (10).

6. Dispositif de surveillance du trafic selon l'une des revendications ci-dessus, caractérisé par le fait que les moyens (30, 44, 38) destinés à engendrer le signal de déclenchement pour le dispositif de déclenchement (20) peuvent être mis hors circuit de sorte que soit le dispositif de déclenchement (20) peut être actionné manuellement soit le dispositif de surveillance du trafic peut être utilisé comme appareil de surveillance du trafic stationnaire en forme d'une disposition radar.

7. Dispositif de surveillance du trafic selon la revendication 5, caractérisé par le fait que les vitesses relatives et absolues du véhicule à détecter (12) ainsi que la vitesse du véhicule de surveillance (10) peuvent être enregistrées sur la photo obtenue au moyen du dispositif de prise de photo (18).

8. Dispositif de surveillance du trafic selon l'une des revendications ci-dessus, caratérisé par le fait que le dispositif de prise de photo (18) est une caméra photographique destinée à établir une documentation photographique (80) du véhicule à détecter (12).

9. Dispositif de surveillance du trafic selon la revendication 8, caractérisé par le fait que le dispositif indicateur (54) est reflété dans la documentation photographique (80).

10. Dispositif de surveillance du trafic selon la revendication 6, caractérisé par le fait que le mode de fonctionnement momentané du dispositif de surveillance du trafic peut être indiqué et enregistré.

11. Dispositif de surveillance du trafic selon l'une des revendications 6 à 10, caractérisé par le fait qu'il est disposé de sorte à pouvoir être pivoté.

12. Dispositif de surveillance du trafic selon la revendication 11, caractérisé par le fait qu'il peut être bloqué dans une ou plusieurs positions.

13. Dispositif de surveillance du trafic selon l'une des revendications ci-dessus, caractérisé par le fait qu'il peut être retiré.

Fig. 1

Fig. 2

OBERER + UNTERER GRENZWERT

WARN. — VERGL. 40 ———42———

46

GRENZWERT

VERGL. 30 ——32—— KAMERA AUSL. 20 ———— 18

SPERRE 44 74

28

SPERRE 38

68 66 50

16 TACHO

26 ANZEIGE ÜBERW. 58

22 SUMMIER. 70 72 52 ANZEIGE ABSOL. 54 60

14 RADAR 24 48 ANZEIGE REL. 56

64 62

VERGL. 34 36

UNTERER GRENZWERT

EP 0 304 626 B1

12

Fig. 3

Fig. 4